# EUROPEAN PATENT APPLICATION

(11) **EP 4 706 398 A1**
(43) Date of publication of application: **11.03.2026**
(21) Application number: 24803768.1
(22) Date of filing: 10.05.2024
(51) Int. Cl.: A23C 20/00, A23D 9/00

(54) **NOVEL IMITATION CHEESE**

(30) Priority: 10.05.2023 KR 20230060539
(71) Applicant: CJ Cheiljedang Corporation, Seoul 04560 (KR)
(72) Inventor: CHO, Hyun Kug, Seoul 04560 (KR); BAK, Youn-Kyung, Seoul 04560 (KR); LEE, Hyeong Rae, Seoul 04560 (KR); YOON, Sang Young, Seoul 04560 (KR); BAE, Sujin, Seoul 04560 (KR); HONG, Sung Ho, Seoul 04560 (KR); PARK, Hye Min, Seoul 04560 (KR); KIM, Ji Young, Seoul 04560 (KR); CHOI, Jung-woon, Seoul 04560 (KR)
(74) Representative: Meissner Bolte Partnerschaft mbB
(86) International application number: PCT/KR2024/006339
(87) International publication number: WO 2024/232715

(57) **Abstract**

The present disclosure relates to an imitation cheese comprising prolamin and a dried cell body, and a method for preparing the same.

The imitation cheese comprising prolamin and a dried cell body provided herein has physical properties similar to those of natural cheese and is nutritionally superior.

The method for preparing an imitation cheese comprising prolamin and a dried cell body provided herein has excellent processability.

## Description

### [Technical Field]

The present disclosure relates to an imitation cheese based on plant-based raw materials and a method for preparing the same.

### [Background Art]

Animal-based raw materials have led to demands for a variety of plant-based products or materials due to potential issues related to environmental factors, religious beliefs, animal welfare, and food safety (allergies), as well as for the sake of a sustainable future. As environmental problems, it has been confirmed that traditional dairy production requires large amounts of water and feed to obtain milk, and methane gas generated from cattle acts as a greenhouse gas that significantly contributes to global warming. In addition, animal welfare concerns are severe, as cattle must undergo artificial insemination in order to produce large quantities of milk. Particularly, since humans are the only species that consumes the milk of another species, developing dairy substitutes to replace conventional dairy products is an essential task that must be addressed for human society, and for this reason, the dairy alternative market is growing rapidly. For example, milk substitutes based on grains such as almond, soybean, or oat milk have achieved remarkable growth in the conventional milk market. Moreover, cultured meat and conventional meat substitutes are also being produced and newly developed in various ways.

Keeping pace with this growth trend, various plant-based cheeses have been developed and hundreds of plant-based cheese companies offer products for sale. However, unlike natural cheese, plant-based cheeses lack protein and employ a high proportion of carbohydrates and oils/fats high in saturated fat such as plant-based shortenings to mimic the physical properties of natural cheese, making them nutritionally less healthy than natural cheese. Additionally, carbohydrates alone cannot reproduce the physical properties of casein protein-based cheese. Plant-based cheeses using prolamin, a plant-based protein similar to casein, have been developed (WO2021-113985) and exhibit some properties similar to those of natural cheese, but due to the high cost of prolamin materials, it is difficult for high-prolamin cheeses to be offered at a popular or comparable price to conventional cheese. Accordingly, there remains a need for alternative cheeses that use less than 10% prolamin with reduced saturated fat content, while exhibiting properties similar to those of natural cheese.

It can be confirmed from various plant-based cheese products that mimicking natural cheese using only starch or other hydrocolloids is highly challenging. Most products have attempted to reproduce the physical properties using only coconut or palm oil combined with starch and hydrocolloids, and thus, upon heating, they fail to show the unique melting and stretching of natural cheese, and their texture is also different. Therefore, it is desirable to develop alternative cheeses that more closely resemble the physical properties of natural cheese, and furthermore, that are nutritionally improved, by blending various plant-based materials or introducing new plant-based materials.

By simply replacing natural cheese with such developed alternative cheeses, many everyday foods could be transformed into complete vegan dishes. For example, everyday foods such as pizza, kimbap, tteokbokki, ramen, pasta, nachos, bagels, macaroni, and French fries can all be perfectly reproduced as vegan foods through the substitution of cheese with plant-based cheese.

### [Disclosure]

### [Technical Problem]

It is one object of the present disclosure to provide an imitation cheese comprising prolamin and a dried cell body.

It is another object of the present disclosure to provide a method for preparing an imitation cheese, comprising: mixing and grinding raw materials comprising prolamin and a dried cell body to prepare a mixture; and heating the mixture.

### [Technical Solution]

The present disclosure provides an imitation cheese comprising prolamin and a dried cell body.

Additionally, the present disclosure provides a method for preparing an imitation cheese, comprising: mixing and grinding raw materials comprising prolamin and a dried cell body to prepare a mixture; and heating the mixture.

### [Advantageous Effects]

The imitation cheese provided herein comprises prolamin and dried cell body in a specific content, thereby providing an alternative cheese that has physical properties similar to those of natural cheese while being superior in terms of economic feasibility and nutrition.

The composition for imitation cheese provided herein comprises prolamin and dried cell body in a specific content, thereby enabling easy storage and providing imitation cheese with physical properties similar to those of natural cheese.

### [Brief Description of the Drawings]

FIG. 1 shows imitation cheeses prepared in the experiments of Experimental Example 1.
FIG. 2 shows the procedure of the melting evaluation of Experimental Example 2.
FIG. 3 shows an example of the melting evaluation of Experimental Example 2 that measures the area at room temperature and after heating.
FIG. 4 shows the degree of elongation in the experiment of Experimental Example 3 to compare the stretchability between the control group and the examples.

### [Detailed Description of Preferred Embodiments]

The present disclosure will be described in detail as follows. Meanwhile, each description and embodiment described herein can be applied to other descriptions and embodiments, respectively. That is, all combinations of various elements described herein fall within the scope of the present disclosure. Further, the scope of the present disclosure is not limited by the specific description described below.

One aspect of the present disclosure provides an imitation cheese comprising prolamin and a dried cell body.

As used herein, the term "imitation cheese" refers to an alternative cheese based on plant-based raw materials and that similarly reproduces the physical properties of casein protein-based natural cheese. The alternative cheese refers to a substitute for natural cheese produced from conventional animal-based raw materials, and the "imitation cheese" and "alternative cheese" can be used interchangeably.

As used herein, the term "prolamin" refers to a simple protein present in the endosperm of plants, examples of which include zein from corn, hordein from barley, gluten, secalin, and kafirin. Currently commercialized plant-based prolamins include gluten and zein, which are considered expensive raw materials and thus are a major factor in the high production cost of plant-based alternative cheese. The imitation cheese of the present disclosure is prepared from plant-based materials and the content of prolamin therein, which is a currently expensive material, is reduced to 10% or less, thereby enabling price formation comparable to conventional natural cheese products.

The prolamin may be comprised in an amount of 1 to 10 parts by weight, specifically 1 to 9 parts by weight, 1 to 8 parts by weight, 2 to 7 parts by weight, 3 to 6 parts by weight, 4 parts by weight, or 5 parts by weight, based on 100 parts by weight of the total imitation cheese, but is not limited thereto. The amount of prolamin may be appropriately adjusted by those skilled in the art according to the purity of the prolamin used.

As used herein, the term "dried cell body" refers to a dried form of a cell body having a high fat content and comprised in the imitation cheese of the present disclosure. Specifically, it may be one or more selected from the group consisting of a microalga and a yeast, but is not limited thereto.

As used herein, the term "microalga(e)" is a generic term for very small algae that are not visible to the naked eye; specifically, it may be one or more selected from the group consisting of *Schizochytrium* sp., *Chlorella* sp., *Spirulina* sp., kelp, and red algae, but is not limited thereto.

As used herein, the term "yeast" may be one or more selected from the group consisting of *Yarrowia* sp., *Saccharomyces* sp., and *Pichia* sp.; specifically, it may be *Yarrowia lipolytica,* but is not limited thereto.

As used herein, the term "cell body fat" refers to fat comprised in the dried cell body comprised in the imitation cheese of the present disclosure. When cell body fat is used, not only can cell bodies form micelles to mimic the micellar structure, but also unsaturated fatty acids, which are liquid at room temperature, can be entrapped in the cell bodies to exist in a solid state at room temperature. The term "unsaturated fatty acids" refers to fatty acids having one or more double bonds in the fatty acid chain, which play a role in providing excellent nutritional effects. By comprising novel fat substitutes such as cell body fat, the imitation cheese of the present disclosure can provide imitation cheese having physical properties highly similar to those of casein protein-based natural cheese, as compared to existing imitation cheese. Additionally, cell body fat can be stored in powder form at room temperature, which improves processing efficiency over plant-based shortenings currently used in imitation or plant-based cheese that are solid at room temperature, and further allows provision of imitation cheese materials or products in premix powder form. This has the advantages of low moisture content, which increases stability against contamination, and logistical efficiency during distribution.

The dried cell body may have a total fat proportion of 40% or more, specifically 45% or more, and more specifically 50% or more. In addition, the dried cell body may contain protein in a content of 10% or more, specifically 15% or more. By comprising the dried cell body, not only a high-quality fat source but also high-quality protein and dietary fiber can be provided. When the dried cell body has a total fat proportion of 40% or more, it may be easier to reproduce the physical properties of natural cheese.

The dried cell body may have a crude protein proportion of 10% or more.

The dried cell body may have a total fat and protein proportion of 50% or more.

The dried cell body may be comprised in an amount of 10 to 35 parts by weight, specifically 10 to 29 parts by weight, or 19 to 25 parts by weight, based on 100 parts by weight of the total imitation cheese, but is not limited thereto. The content of the dried cell body may be appropriately adjusted by those skilled in the art according to the amount of moisture evaporation. When the dried cell body is comprised in an amount exceeding 35 parts by weight based on 100 parts by weight of the total imitation cheese, it may become difficult to mimic the melting of natural cheese.

The imitation cheese of the present disclosure is characterized by comprising a combination of prolamin and dried cell body as one of its key technical features. In one embodiment of the present disclosure, it was confirmed that, when the imitation cheese comprised 0.1 to 10 parts by weight of prolamin and 10 to 35 parts by weight of dried cell body based on 100 parts by weight of the total imitation cheese, the physical properties were highly similar to those of natural cheese.

The imitation cheese of the present disclosure has a low content of saturated fatty acids and a high content of protein, thereby being nutritionally excellent and nutritionally more similar to casein protein-based natural cheese.

The imitation cheese may have a total protein content of 8% or more, specifically 10% or more. The imitation cheese of the present disclosure comprises prolamin and a dried cell body, and accordingly, in addition to prolamin, proteins comprised in the dried cell body can improve the protein content of the plant-based cheese.

The imitation cheese may have a total fat content of 15% or more, specifically 17% or more, and more specifically 19% or more. As the dried cell body comprises unsaturated fatty acids, the fat comprised in the imitation cheese of the present disclosure may have a high proportion of unsaturated fatty acids and thus be nutritionally excellent.

In addition, based on the fact that casein protein-based natural cheeses conventionally demonstrate distinct melting and stretching properties, the imitation cheese of the present disclosure was confirmed to exhibit melting and stretching similar to those of casein protein-based natural cheese, unlike conventional commercialized plant-based cheeses. This confirms that the visual properties of cheese conventionally observed during consumption can be reproduced.

Further, the imitation cheese of the present disclosure was confirmed to be soft or melted upon heating, and to retain a certain firmness when refrigerated, thereby exhibiting physical properties highly similar to casein protein-based natural cheese. This means that no foreign texture is perceived when consuming the cheese in either refrigerated or heated state.

The imitation cheese of the present disclosure may further comprise a plant-based oil. The plant-based oil is in a solid state at room temperature and a liquid state upon heating, and thus, it may be additionally comprised to reproduce the unique physical property of natural cheese, namely the softened or melted state upon heating. The plant-based oil may specifically include one or more selected from the group consisting of canola oil, sunflower oil, safflower oil, soybean oil, avocado oil, olive oil, corn oil, flaxseed oil, almond oil, coconut oil, margarine, tucuma butter, hydrogenated oil, non-hydrogenated hard oil, peanut oil, pecan oil, cottonseed oil, algal oil, palm oil, palm kernel oil, palm stearin, palm olein, evening primrose oil, sesame oil, butter oil, cocoa butter, grape seed oil, rapeseed oil, mustard oil, hazelnut oil, Brazil nut oil, flaxseed oil, acai palm oil, passion fruit oil, walnut oil, shea butter, shea stearin, shea olein, palm kernel stearin, palm kernel olein, rice bran oil, coconut oil, palm oil, margarine, plant-based shortening, plant-based oleogel, or a mixture comprising the same, but is not limited thereto.

The plant-based oil may be comprised in an amount of 5 to 30 parts by weight, specifically 5 to 25 parts by weight, 5 to 20 parts by weight, or 7 to 15 parts by weight, and more specifically 10 parts by weight, based on 100 parts by weight of the total imitation cheese composition, but is not limited thereto. When the plant-based oil is comprised in an amount exceeding 30 parts by weight based on 100 parts by weight of the total imitation cheese composition, it may have adverse effects on the nutrition due to the high contents of fat and carbohydrate relative to protein, even if melting is excellent. Additionally, when the plant-based oil is comprised in an amount less than 5 parts by weight based on 100 parts by weight of the total imitation cheese composition, melting may not be excellent.

The imitation cheese of the present disclosure may be a plant-based cheese. The plant-based cheese may not comprise any animal-derived raw materials separated from cows, horses, sheep, goats, and the like.

Although the imitation cheese of the present disclosure does not comprise animal-derived raw materials, it has an advantageous effect of exhibiting physical properties and texture similar to those of cheese produced from animal-derived raw materials, and can thus be usefully employed as an alternative to animal-based natural cheese.

The imitation cheese of the present disclosure may further comprise a hydrocolloid. Specifically, the hydrocolloid may be one or more selected from the group consisting of plant-based starch, modified starch, maltodextrin, agar, pectin, inulin, gamma polyglutamic acid, carrageenan, locust bean gum, citrus fiber, tamarind gum, guar gum, galactomannan, and glucomannan, but is not limited thereto.

The hydrocolloid may be comprised in an amount of 10 to 18 parts by weight, specifically 10.5 to 16.5 parts by weight, 10 to 12 parts by weight, and more specifically 11 to 12 parts by weight, based on 100 parts by weight of the total imitation cheese, but is not limited thereto.

The imitation cheese of the present disclosure may not comprise plant-based proteins other than prolamin. Even without further comprising plant-based proteins, the imitation cheese of the present disclosure may maintain a total protein content of 10% or more.

The imitation cheese of the present disclosure may further comprise a plant-based protein. As used herein, the term "plant-based protein" refers to a plant-based protein other than prolamin in the context of the present disclosure, and may specifically be one or more selected from the group consisting of sweet potato protein, rice protein, mung bean protein, quinoa protein, pea protein, soybean protein, corn protein, pea protein, fair protein, bean protein, wheat protein, buckwheat protein, lentil protein, sorghum protein, broad bean protein, gluten protein, cashew protein, pumpkin seed protein, potato protein, chickpea protein, lentil protein, rice protein, corn protein, sunflower seed protein, tomato seed protein, pongamia protein, canola protein, peanut protein, almond protein, mushroom protein, quinoa protein, lupine protein, oat protein, amaranth protein, flaxseed protein, chia seed protein, cottonseed protein, buckwheat protein, sorghum protein, barley protein, watercress protein, penny site protein, hemp seed protein, millet protein, teff protein, felt protein, alfalfa protein, whey protein, broad bean protein, red bean protein, *Cannellini* bean protein, grass protein, black bean protein, black gram protein, maca powder, yam powder, microalgal protein, yeast protein, other cell body protein, or a mixture of the same, but is not limited thereto.

The plant-based protein may be additionally comprised in the imitation cheese in an appropriate amount, specifically less than 20 parts by weight based on 100 parts by weight of the total imitation cheese, but is not limited thereto.

The imitation cheese of the present disclosure may further comprise an organic acid, a salt, or a combination thereof. Specifically, the organic acid and salt may be citric acid, lactic acid, sodium chloride, calcium chloride, or a combination thereof, but are not limited thereto.

Another aspect of the present disclosure provides a method for preparing an imitation cheese, comprising: (a) mixing and grinding raw materials comprising prolamin and a dried cell body to prepare a mixture; and (b) heating the mixture.

The step (a) refers to introducing each material for preparing imitation cheese to prepare a mixture. The prolamin, dried cell body, *etc.,* which are components of the imitation cheese, may be blended sequentially, in reverse order, or simultaneously, and then mixed.

The imitation cheese is as defined above. The materials may further comprise a plant-based protein, plant-based oil, hydrocolloid, or a combination thereof. The prolamin and dried cell body are as defined above.

In one embodiment, the dried cell body may be comprised in an amount of 10 to 35 parts by weight, specifically 10 to 29 parts by weight, or 19 to 25 parts by weight, based on 100 parts by weight of the total imitation cheese. The dried cell body may be provided as a powder, which has good processability. This means that there are significant advantages in actual commercialization and production. Additionally, compared to plant-based shortening currently used in preparation of imitation or plant-based cheese, which is processed under hard physical properties at room temperature that provide inefficiency problems, the dried cell body in powder form has a low moisture content, which is stable against contamination, and improves logistical efficiency during distribution.

In one embodiment, as defined above, the prolamin may be comprised in an amount of 0.1 to 10 parts by weight, and the dried cell body may be comprised in an amount of 10 to 35 parts by weight, based on 100 parts by weight of the total imitation cheese.

The step (a) may further selectively comprise, after all or some of the materials are introduced, mixing and/or homogenization to facilitate mixing. The homogenization refers to a process of grinding and evenly spreading the particles. The homogenization may be achieved using a known method in the art. Specifically, the homogenization may use a mixer or a homogenizer, but is not limited thereto.

In one embodiment, the step (a) may comprise: step (a-1) of first introducing powder-type raw materials and then grinding and preparing a mixture; and step (a-2) of introducing water and oils/fats into the powder obtained in the step (a-1) and then mixing and grinding, but is not limited thereto.

Specifically, the powder-type raw materials of the step (a-1) may comprise a dried cell body.

The step (b) refers to heating the mixture obtained in the step (a).

Specifically, in the step (b), heating may refer to increasing the temperature to 70°C to 95°C, more specifically 70°C to 90°C, 80°C to 95°C, 80°C to 90°C, 85°C to 92°C, or 90°C.

Specifically, the increasing the temperature in the step (b) refers to rapidly increasing the temperature of the mixture to a target heating temperature. The temperature rise may be within 1 to 5 minutes, specifically 1 to 3 minutes, but is not limited thereto. When the temperature rise is performed for more than 5 minutes, it may lead to increased viscosity due to evaporation, *etc.,* and cause the mixture to adhere to the internal surfaces of equipment, making recovery difficult, or lead to reduced yield due to material denaturation.

By carrying out the series of steps described above, the imitation cheese of the present disclosure is finally obtained. The method for preparing an imitation cheese of the present disclosure uses a powdered dried cell body, which is characterized by excellent processability and yield, providing significant advantages in actual commercialization and production. Additionally, imitation cheese prepared according to a method as the method above is nutritionally superior as it has a low content of saturated fatty acids and a high protein content, and is nutritionally more similar to casein protein-based natural cheese. Further, compared to conventional commercialized plant-based cheese, it exhibits melting and stretching similar to casein protein-based natural cheese.

Another aspect of the present disclosure provides a composition for imitation cheese comprising prolamin and a dried cell body.

As used herein, the term "composition for imitation cheese" refers to a composition for preparing imitation cheese, and may be in powder form. Further, the composition for imitation cheese of the present disclosure may be a premix powder. As used herein, the term "premix powder" refers to a powder provided in powder form and produced by blending various raw materials to make a specific product.

The dried cell body of the present disclosure can be stored in powder form at room temperature, and accordingly, the composition for imitation cheese can be provided in powder form. This has advantages of low moisture content, which increases stability against contamination, and logistical efficiency during distribution.

The prolamin may be comprised in an amount of 5 to 15 parts by weight, specifically 7 to 13 parts by weight, or 8 to 12 parts by weight, and more specifically 9 to 11 parts by weight, based on 100 parts by weight of the total composition for imitation cheese, but is not limited thereto. The amount of prolamin may be appropriately adjusted by those skilled in the art according to the purity of the prolamin used.

The dried cell body may be comprised in an amount of 40 to 70 parts by weight, specifically 45 to 65 parts by weight, and more specifically 50 to 60 parts by weight, based on 100 parts by weight of the total composition for imitation cheese, but is not limited thereto. The content of the dried cell body may be appropriately adjusted by those skilled in the art according to the amount of moisture evaporation.

The composition for imitation cheese of the present disclosure may further comprise a hydrocolloid or a plant-based protein.

### [Mode for Carrying Out the Invention]

The present disclosure will be described in detail by way of Examples. The Examples are provided to specifically explain the present disclosure, and the scope of the present disclosure is not limited by the Examples.

### Experimental Example 1: Preparation of Examples 1 to 3 and Comparative Examples 1 to 5

For the preparation of imitation cheese, the following raw materials in Table 1 were used.

**[Table 1]**

| Prolamin | Hydrocolloids | Oils/fats | Organic Acids | Minerals | Plant-based proteins |
|---|---|---|---|---|---|
| | Tapioca starch Corn starch | Coconut oil 2 types of yeast fat | Citric acid | Calcium chloride | Soybean protein |
| Zein | Potato starch | | | | |
| | Kappa carrageenan | | Lactic acid | Sodium chloride | |
| | Modified starch | Microalgae fat | | | Yam powder |
| | Locust Bean Gum (LBG) | | | | |
| | Citrus Fiber (CF) | | | | |

The sources of the respective materials used were as follows: yeast cell body (CJ CheilJedang, Strain Nos. #198 and #199, South Korea), microalgal cell body (WT), zein (F4400C, USA), tapioca starch (retail), corn starch (retail), potato starch (retail), kappa carrageenan (CP Kelco.), maltodextrin (Mazdani Korea Co., Ltd.), locust bean gum (CP Kelco.), citrus fiber (CP Kelco.), coconut oil (Bwetter Body Foods), citric acid (retail), lactic acid (retail), calcium chloride (retail), sodium chloride (retail), soybean protein (Vicsol Co., Ltd.), and yam powder (retail).

The above materials were blended in the parts by weight shown in Table 2 based on 100 parts by weight of the total imitation cheese. Water was mixed as the balance. A high-speed thermomixer was used for blending and processing. The equipment used was a dedicated cooker (ALLDA-1000 device, Weldin Co., Ltd.), and other consumables were consumable materials commonly available for purchase. Each raw material was weighed on a balance, followed by addition of powdered raw materials first to undergo grinding and mixing. To the homogenized powder, oils/fats and water were added, followed by further grinding and mixing. Heating was not performed during this step. After water and oils/fats were mixed, rapid heating and high-speed grinding were performed simultaneously. The heating temperature was raised to 90 °C within 2 minutes, and mixing was carried out at 4000 RPM to 5000 RPM. Thereafter, each sample was transferred into a container and molded at room temperature for 1 hour and in a refrigerator for 24 hours.

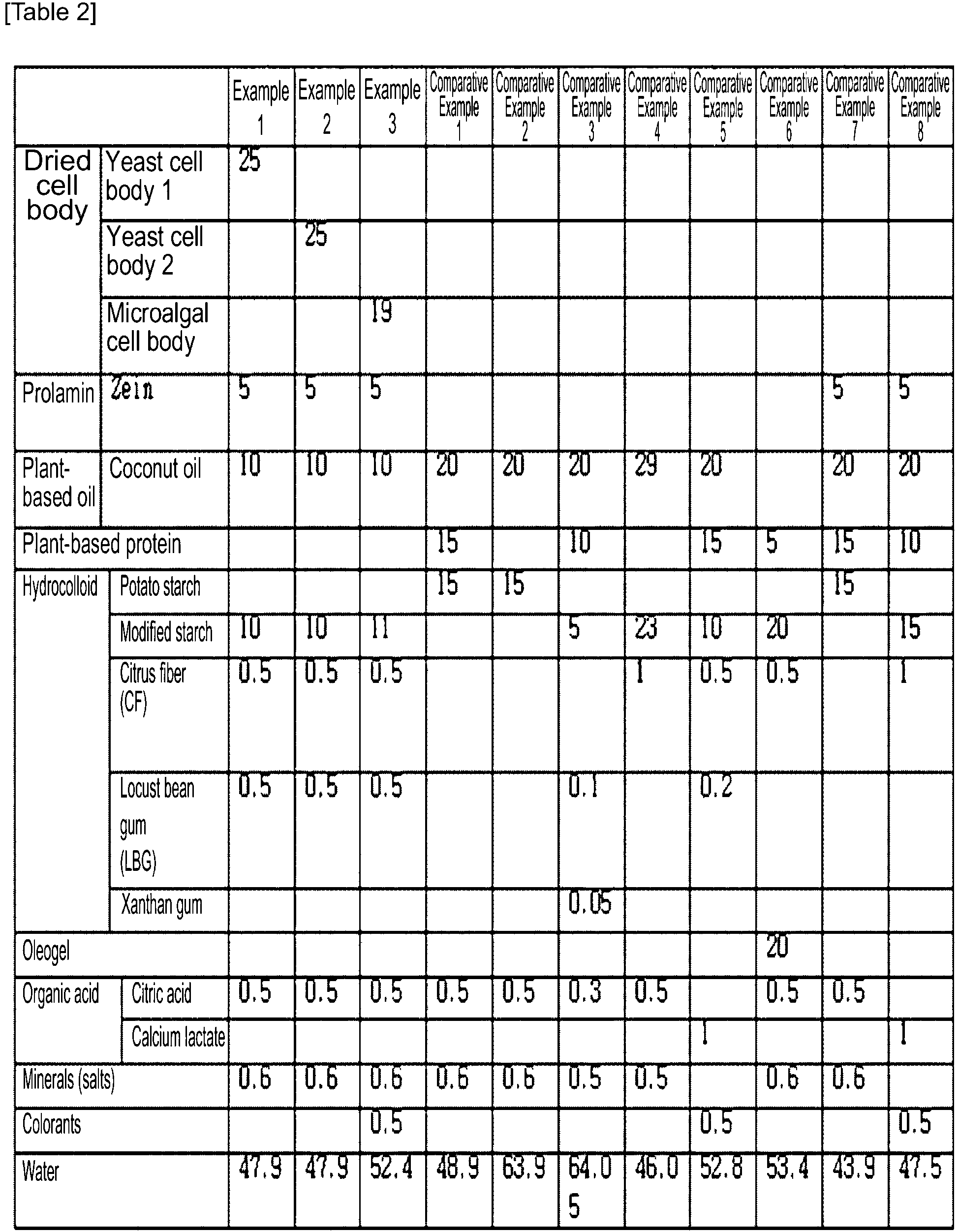

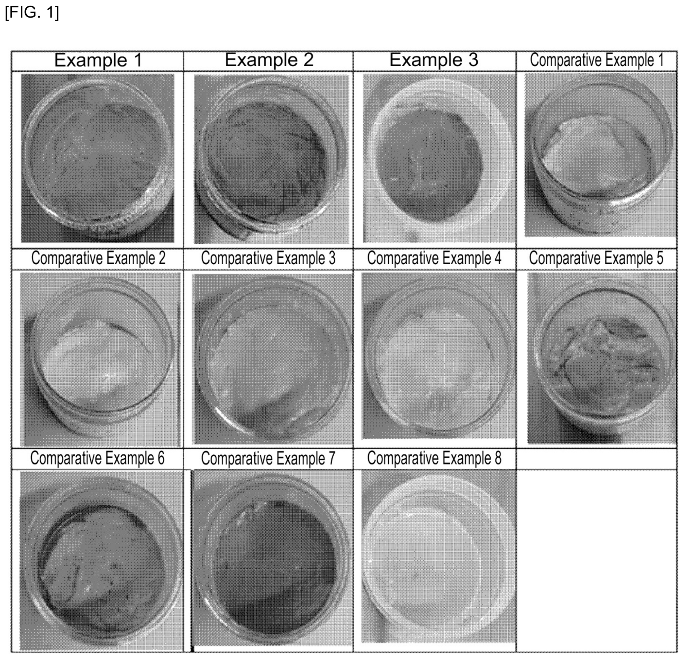

The specific details of each Example and Comparative Example are as follows, and images of the imitation cheeses of each Example and Comparative Example after preparation are shown in FIG. 1.

### Examples 1 and 2: Preparation of imitation cheese comprising yeast cell body as a dried cell body

Examples 1 and 2 are imitation cheeses comprising two different yeast dried cell bodies and comprising zein as a prolamin. The yeast used was *Yarrowia lipolytica,* wherein different variants of the same species were used. The total fat proportion of the yeast cell body was about 40%, and the total protein proportion was about 10 to 15%.

### Example 3: Preparation of imitation cheese comprising microalgal cell body as a dried cell body

Example 3 is an imitation cheese comprising a microalgal dried cell body and comprising zein as a prolamin. As the microalga, *Schizochytrium* sp. microalga was used. The total fat proportion of the microalgal cell body was about 60%, and the total protein proportion was about 10 to 15%.

### Comparative Examples 1 to 6: Preparation of imitation cheese not comprising prolamin and dried cell body

Comparative Examples 1 to 6 are imitation cheeses comprising neither prolamin nor a dried cell body. They were prepared by using a blending proportion similar to that of conventional plant-based cheese.

### Comparative Examples 7 and 8: Preparation of imitation cheese not comprising dried cell body

Comparative Examples 7 and 8 are imitation cheeses comprising zein as a prolamin but not comprising a dried cell body.

### Experimental Example 2: Melting Evaluation

The melting of each sample was measured, and the area before and after heating were analyzed to compare the proportion of area increase (%). Natural mozzarella cheese was used as a positive control.

Specifically, all imitation cheeses and the positive control cheeses were aliquoted into 5 g samples and molded into diameters of 25 to 28 mm. For maintaining horizontal positioning and heating, the aliquoted samples were subjected to a first heating in a water bath at 80°C for 5 minutes, and a second heating was performed by applying the same cover in a commonly used microwave oven (700 W). Each heating was carried out at 15-minute intervals in order to minimize heating error.

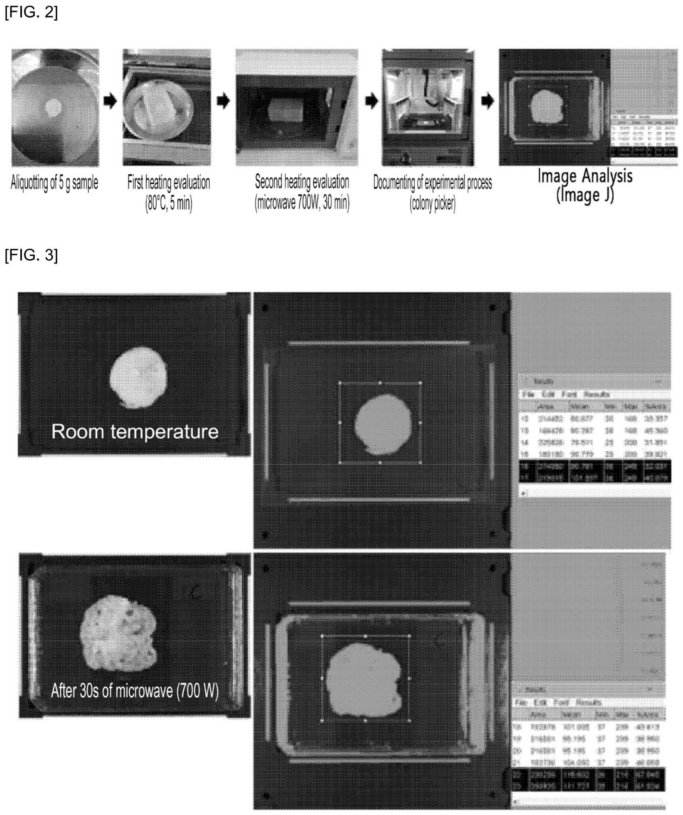

The procedure of the melting evaluation is shown in FIG. 2, and an example of measuring and comparing area at room temperature and after heating is shown in FIG. 3. For each before-and-after result, a colony picker (PIXL) capable of photographing under the same conditions was used. The equipment used was a colony picker (PIXL; SINGER, UK), and the documented images were analyzed using a software to measure area values in duplicate as shown in FIG. 3. The cheese melting by area measurement was measured by the Schreiber method, and the details of area calculation were referred to the following literature: Automated Method for Determination of Cheese Meltability by Computer Vision, Food Analytical Methods (2021) 14:2630-2641.

The evaluation results obtained through the above procedure are shown in Table 3 below.

**[Table 3]**

| | Area at room temperature | Area after first heating | Area after second heating | Proportion of area increase (%) |
|---|---|---|---|---|
| Example 1 | 73404.2 | 68600.5 | 98351.7 | 130 |
| Example 2 | 62257.2 | 60592.7 | 77381.4 | 125 |
| Example 3 | 73307.2 | 75313.2 | 123260.5 | 168 |
| Comparative Example 1 | 78530.0 | 75823.8 | 71928.5 | 92 |
| Comparative Example 2 | 73576.5 | 69003.5 | 74161.7 | 101 |
| Comparative Example 3 | 84089.7 | 70716.2 | 66270.2 | 79 |
| Comparative Example 4 | 77623.6 | 72708.5 | 83118.4 | 107 |
| Comparative Example 5 | 61596.5 | 54510.3 | 59298.9 | 96 |
| Comparative Example 6 | 70273.7 | 68843.7 | 78383.1 | 112 |
| Comparative Example 7 | 77933.4 | 77291.9 | 73955.2 | 95 |
| Comparative Example 8 | 103512.7 | 97561.7 | 116837.0 | 113 |
| Natural Cheese 1 | 87781.0 | 84163.5 | 154375.1 | 176 |
| Natural Cheese 2 | 81254.7 | 76786.1 | 121937.3 | 150 |

Referring to Table 3, the positive controls, which are the natural cheeses, had a proportion of area increase of 150% or more, and Comparative Examples 1 to 6, which comprised neither a dried cell body nor a prolamin, and Comparative Examples 7 and 8, which comprised no dried cell body, had a proportion of area increase of 120% or less. In view of the above, it can be recognized that Examples 1 to 3, which are embodiments of the present disclosure comprising both a dried cell body and a prolamin, had a proportion of area increase similar to those of the natural cheeses compared to the Comparative Examples. Such results indicate that imitation cheese comprising a dried cell body and a prolamin can achieve physical properties similar to those of natural cheese without perceptible difference, as compared to conventional plant-based cheese. This means that, through the inclusion of a dried cell body, the imitation cheese not only becomes nutritionally superior due to the proteins and unsaturated fatty acids comprised in the dried cell body, but also provides excellent reproduction of the physical properties of natural cheese due to the dried cell body mimicking the casein micelle structure.

### Experimental Example 3: Preparation and Evaluation of High-Prolamin Imitation Cheese

In order to confirm the degree of reproduction of the physical properties of natural cheese by imitation cheese when the protein content is increased by comprising a high content of prolamin without comprising a dried cell body, Comparative Example 9 was prepared by blending in the parts by weight shown in Table 4, and the melting was evaluated. Since no cell body was comprised, modified starch was additionally comprised to adjust the carbohydrate content.

**[Table 4]**

| | Prolamin | Coconut oil | Hydrocolloids | | | Citric acid | Minera Is | Color ant | Wate r | Proportio n of area increase (%) |
|---|---|---|---|---|---|---|---|---|---|---|
| | Zein | | Modified starch | CF | LBG | | | | | |
| Compar ative Example 9 | 30 | 20 | 20 | 0.5 | 0.5 | 0.5 | 0.6 | 0.5 | 37.4 | 111 |

As a result of measuring the proportion of area increase in the same manner as performed in Experimental Example 2, it was confirmed to be 111%, indicating that the melting was lowered. This means that merely increasing the content of prolamin without comprising a dried cell body makes it difficult to reproduce the physical properties of natural cheese. In addition, since prolamin is regarded as an expensive raw material, the economic efficiency is also low.

### Experimental Example 4: Comparative Evaluation With Commercialized Plant-Based Cheese Products

In addition, for comparative evaluation with commercialized plant-based cheese, the melting was evaluated for Comparative Example 10, which was prepared in a manner similar to commercialized plant-based cheese, and Comparative Example 11, which corresponds to an actual commercialized plant-based cheese product. Comparative Example 10 was blended in the parts by weight shown in Table 5 below, and the nutritional components and estimated blending proportions of Comparative Example 11 are shown in Table 6. Table 6 below may contain errors depending on differences in the analytical methods of nutritional components.

**[Table 5]**

| | Coconut oil | Hydrocolloids | | | Citric acid | Mineral s | Wate r | Proportion of area increase (%) |
|---|---|---|---|---|---|---|---|---|
| | | Modified starch | CF | LBG | | | | |
| Comparati ve Example 10 | 30 | 30 | 0.5 | 0.5 | 0.5 | 0.6 | 37.9 | 119 |

**[Table 6]**

| | Comparative Example 11 | |
|---|---|---|
| | Per g | Percen tage |
| Total | 28.0 | (%) |
| Fat | 6.0 | 21.4 |
| Salt | 0.3 | 1.0 |
| Hydrocolloid | 6.0 | 21.4 |
| Protein | 1.0 | 3.6 |
| Calcium | 0.3 | 0.9 |
| Water | 14.4 | 1.4 |

The method of measuring melting was as described above, and the results are shown in Table 7 below.

**[Table 7]**

| | Area at room temperature | Area after first heating | Area after second heating | Proportion of area increase (%) |
|---|---|---|---|---|
| Comparative Example 10 | 86802.7 | 84775.7 | 103505.4 | 119 |
| Comparative Example 11 | 96986.9 | 98621.6 | 111251.9 | 115 |

Referring to Table 7, it can be recognized that the proportion of area increase of Comparative Examples 10 and 11 was 120% or less, which was lower than that of Examples 1 to 3 confirmed in Experimental Example 2. This means that the imitation cheese of the present disclosure has superior reproduction of the physical properties of natural cheese compared to conventional commercialized plant-based cheese.

### Experimental Example 5: Stretching Evaluation

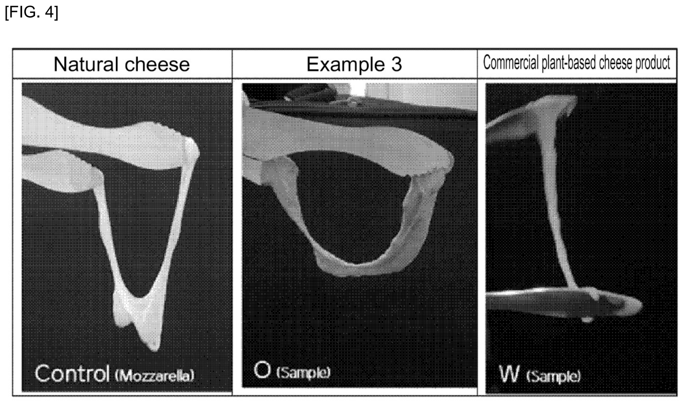

The stretching measurement was performed by placing 10 g of the same samples in the center of a microwave oven (700 W), heating for 20 seconds, and then measuring the extent of stretching using tongs. Natural mozzarella cheese was used as a positive control, and as a negative control, a commercialized plant-based mozzarella cheese product having physical properties most similar to those of conventional cheese was used. Each sample measurement was carried out at 10-minute intervals in order to minimize heating error. The stretching of the above controls and Example 3, which exhibited the most superior proportion of area increase in Experimental Example 2, was compared and is shown in FIG. 4.

Referring to FIG. 4, it can be recognized that Example 3 prepared according to one embodiment of the present disclosure exhibited stretching that was superior to that of conventional commercialized plant-based cheese products and similar to that of natural cheese. Through the above, it was confirmed that physical properties similar to those of natural cheese can be achieved even visually.

Accordingly, it was confirmed that the imitation cheese prepared according to one embodiment of the present disclosure excellently mimicked the distinctive physical properties of natural cheese, namely melting and stretching, compared to conventional plant-based imitation cheese.

As set forth above, those skilled in the art will be able to understand that the present disclosure may be embodied in other specific forms without departing from the technical spirit or essential characteristics thereof. In this regard, it should be understood that the foregoing examples are illustrative in all respects and are not to be construed as limiting. The scope of the present disclosure should be construed as including the meaning and scope of the appended claims rather than the detailed description, and all changes or variations derived from the equivalent concepts fall within the scope of the present disclosure.

## Claims

1. An imitation cheese comprising prolamin and a dried cell body.

2. The imitation cheese according to claim 1,
wherein the dried cell body has a fat content of 40% or more.

3. The imitation cheese according to claim 1,
wherein the dried cell body has a fat and protein content of 50% or more.

4. The imitation cheese according to claim 1,
wherein the cell body is the cell body of a microalga or the cell body of a yeast.

5. The imitation cheese according to claim 4,
wherein the microalga is one or more selected from the group consisting of *Schizochytrium* sp., *Chlorella* sp., *Spirulina* sp., and red algae.

6. The imitation cheese according to claim 4,
wherein the yeast is one or more selected from the group consisting of *Yarrowia* sp., *Saccharomyces* sp., and *Pichia* sp..

7. The imitation cheese according to claim 1,
wherein the imitation cheese has a total protein content of 8% or more.

8. The imitation cheese according to claim 1,
wherein the imitation cheese has a total fat content of 15% or more.

9. The imitation cheese according to claim 1,
wherein the dried cell body is comprised in an amount of 10 to 35 parts by weight, based on 100 parts by weight of the total imitation cheese.

10. The imitation cheese according to claim 1,
wherein the prolamin is comprised in an amount of 1 to 10 parts by weight, based on 100 parts by weight of the total imitation cheese.

11. The imitation cheese according to claim 1,
further comprising a plant-based oil.

12. The imitation cheese according to claim 11,
wherein the plant-based oil is comprised in an amount of 10 to 30 parts by weight, based on 100 parts by weight of the total imitation cheese.

13. The imitation cheese according to claim 11,
wherein the plant-based oil is one or more selected from the group consisting of canola oil, sunflower oil, safflower oil, soybean oil, avocado oil, olive oil, corn oil, flaxseed oil, almond oil, coconut oil, margarine, tucuma butter, hydrogenated oil, non-hydrogenated hard oil, peanut oil, pecan oil, cottonseed oil, algal oil, palm oil, palm kernel oil, palm stearin, palm olein, evening primrose oil, sesame oil, butter oil, cocoa butter, grape seed oil, rapeseed oil, mustard oil, hazelnut oil, Brazil nut oil, acai palm oil, passion fruit oil, walnut oil, shea butter, shea stearin, shea olein, palm kernel stearin, palm kernel olein, rice bran oil, plant-based shortening, plant-based oleogel, or a mixture comprising the same.

14. The imitation cheese according to claim 1,
further comprising a hydrocolloid.

15. The imitation cheese according to claim 14,
wherein the hydrocolloid is comprised in an amount of 10 to 15 parts by weight, based on 100 parts by weight of the total imitation cheese.

16. The imitation cheese according to claim 14,
wherein the hydrocolloid is one or more selected from the group consisting of plant-based starch, modified starch, maltodextrin, agar, pectin, inulin, gamma polyglutamic acid, carrageenan, locust bean gum, citrus fiber, tamarind gum, guar gum, galactomannan, and glucomannan.

17. The imitation cheese according to claim 1,
further comprising a plant-based protein.

18. A method for preparing an imitation cheese, comprising mixing and grinding raw materials comprising prolamin and a dried cell body to prepare a mixture; and
heating the mixture.

19. A composition for imitation cheese, comprising prolamin and a dried cell body.

20. The composition for imitation cheese according to claim 19,
wherein the composition is in powder form.

21. The composition for imitation cheese according to claim 19,
wherein the prolamin is comprised in an amount of 5 to 15 parts by weight, based on 100 parts by weight of the total composition for imitation cheese.

22. The composition for imitation cheese according to claim 19,
wherein the dried cell body is comprised in an amount of 40 to 70 parts by weight, based on 100 parts by weight of the total composition for imitation cheese.

23. The composition for imitation cheese according to claim 19,
further comprising a hydrocolloid or a plant-based protein.
